Europäisches Patentamt

European Patent Office

Office européen des brevets

(11) Veröffentlichungsnummer: **0 317 734**
**B1**

(12) **EUROPÄISCHE PATENTSCHRIFT**

(45) Veröffentlichungstag der Patentschrift: **06.02.91**

(21) Anmeldenummer: **88115822.4**

(22) Anmeldetag: **26.09.88**

(51) Int. Cl.⁵: **B 62 D 7/20,** B 62 D 7/16

(54) **Verstellbare Befestigung eines Kugelgelenkes an einer Spurstange für Lenkgestänge von Kraftfahrzeugen.**

(30) Priorität: **24.11.87 DE 3739704**

(43) Veröffentlichungstag der Anmeldung:
**31.05.89 Patentblatt 89/22**

(45) Bekanntmachung des Hinweises auf die
Patenterteilung:
**06.02.91 Patentblatt 91/06**

(84) Benannte Vertragsstaaten:
**DE ES FR GB IT**

(56) Entgegenhaltungen:
**EP-A-2 222 502**
**DE-A-2 130 898**
**US-A-4 146 340**

(73) Patentinhaber: **TRW Ehrenreich GmbH & Co. KG**
**Hansa-Allee 190**
**D-4000 Düsseldorf 11 (DE)**

(72) Erfinder: **Broszat, Lothar**
**Sperberstrasse 21**
**D-4019 Monheim (DE)**
Erfinder: **Servos, Michael**
**Fuchsbergstrasse 6 A**
**D-4010 Hilden (DE)**
Erfinder: **Schnitzler, Dieter**
**Mettmanner Strasse 117**
**D-4010 Hilden (DE)**

(74) Vertreter: **Patentanwälte Dipl.-Ing. Alex Stenger**
**Dipl.-Ing. Wolfram Watzke Dipl.-Ing. Heinz J.**
**Ring**
**Kaiser-Friedrich-Ring 70**
**D-4000 Düsseldorf 11 (DE)**

Courier Press, Leamington Spa, England.

**Beschreibung**

Gegenstand der Erfindung ist eine verstellbare Befestigung eines Kugelgelenkes an einer Spurstange für Lenkgestänge von Kraftfahrzeugen, wobei das Kugelgelenk einen um eine Mittelachse allseitig beweglich in einem Gelenkgehäuse gelagerten Kugelzapfen aufweist und die Mittelachse durch Verstellen des Kugelgelenkes relativ zur Spurstange verschiebbar ist.

Es sind bereits verstellbare Befestigungen von Kugelgelenken an Spurstangen bekannt geworden, bei denen die Gelenkgehäuse der Kugelgelenke mit einem Gewindezapfen versehen sind, die in die längsgeschlitzten Enden eines Spurstangenrohres geschraubt und mit Klemmschellen fixiert werden. Diese Verstelltechnik kann jedoch nicht o.w. bei U-profilförmigen Spurstangen zum Einsatz kommen. Ferner ist eine Feineinstellung nur möglich, wenn beide Enden der Spurstange mit gegenläufigen Innengewinden zur Aufnahme von zwei Kugelzapfen versehen sind. Schließlich sind Montage und Nachstellen der vorbekannten Befestigung relativ aufwendig.

Aus der DE-OS 21 30 898 ist ein Lenkgestänge bekannt, bei dem die Anlenkpunkte von Spurstangen an einer Verbindungsstange verstellbar sind. Hierzu sind Kugelgelenke vorgesehen, die mit Bolzenabschnitten Langlöcher einer Mittelstange durchgreifen und mittels Klemmschrauben festgespannt sind. Diese Konstruktion ist jedoch nicht besonders bedienungsfreundlich. Insbesondere sind hohe Anzugskräfte erforderlich, um die Klemmschrauben ausreichend zu sichern.

Davon ausgehend liegt der Erfindung die Aufgabe zugrunde, eine verbesserte verstellbare Befestigung eines Kugelgelenkes an einer Spurstange zu schaffen, die insbesondere auch bei U-profilförmigen Spurstangen zum Einsatz kommen kann, montage- und bedienfreundlich ist und eine Feineinstellung ermöglicht.

Zur technischen Lösung dieser Aufgabe ist vorgesehen, daß das Kugelgelenk eine Befestigungsplatte aufweist, die eine exzentrisch zur Mittelachse der Bewegungen des Kugelzapfens angeordnete Lagerbohrung hat, daß die Befestigungsplatte mit ihrer Lagerbohrung an einem spurstangenfesten Befestigungselement schwenkbar gelagert ist, und daß die Spurstange an der Befestigungsplatte angreifende Feststellelemente zur Festlegung des Kugelgelenkes in einer bestimmten Schwenklage aufweist.

Bei einer erfindungsgemäßen verstellbaren Befestigung ist also das Kugelgelenk um ein durch die Lagerbohrung seiner Befestigungsplatte geführtes Befestigungselement der Spurstange schwenkbar und kann mittels eines an der Befestigungsplatte angreifenden Feststellelementes in jeder Schwenklage festgelegt werden. Als Befestigungselemente kommen beispielsweise einfache Schraub-, Bolzen- oder Nietverbindungen in Betracht. Als Feststellelement kann in einem einfachen Fall eine in ein spurstangenseitiges Gewinde eingeschraubte und gegen die Befestigungsplatte drückende Schraube verwendet werden.

Eine erfindungsgemäße verstellbare Befestigung hat den Vorteil, daß sie bei Spurstangen mit U-förmigem Profil eingesetzt werden kann. Ferner ist sie montage- und bedienungsfreundlich, weil bei einer Ein- bzw. Verstellung der Befestigung lediglich die Feststellelemente bedient werden müssen. Schließlich ist auch eine Feineinstellung möglich, insbesondere wenn die Spurstange nur mit einem Kugelgelenk verbunden ist.

Bei einer Ausgestaltung der Erfindung ist vorgesehen, daß das Feststellelement zur Festlegung des Kugelgelenkes in einer bestimmten Schwenklage eine durch eine Bohrung der Spurstange geführte Verschraubung ist, die ein Langloch der Befestigungsplatte durchgreift, wobei sich das Langloch auf einem Kreisbogen um die Lagerbohrung erstreckt. Bei dieser Ausführungsform wird der Schwenkbereich des Kugelgelenkes durch die Länge und Lage des Langloches festgelegt. Beim Erreichen der gewünschten Schwenklage wird das Kugelgelenk durch Anziehen der Verschraubung gesichert. Da die Verschraubung in einem gewissen Abstand von der Lagerbohrung an der Befestigungsplatte angreift, sind bei geringen Anzugsmomenten der Verschraubung hohe Sicherungskräfte erreichbar.

Bei einer weiteren Ausgestaltung ist vorgesehen, daß die Spurstange eine Lagerplatte zur Aufnahme des Befestigungselementes und des Feststellelementes aufweist. Eine derartige Lagerplatte kann beispielsweise von einem Schenkel einer U-profilförmigen Spurstange gebildet werden. Die Befestigungsplatte kann auf der Lagerplatte großflächig zur Anlage kommen, so daß eine günstige Krafteinleitung und hohe Befestigungs- bzw. Feststellkräfte erzielt werden.

Bei einer weiteren Ausgestaltung ist vorgesehen, daß die Spurstange einen Gabelkopf aufweist, der in einer Gabelöffnung die Befestigungsplatte des Kugelgelenkes aufnimmt. Hierbei werden die Befestigungs- und Feststellelemente von die Schenkel des Gabelkopfes miteinander verbindenden Schrauben gebildet. Die Befestigungsplatte wird in der gewünschten Schwenklage zwischen den Schenkeln des Gabelkopfes verspannt, indem sowohl die Feststell- als auch die Befestigungsschrauben angezogen werden. Die auf diese Weise erzielte Sicherung löst sich auch nicht bei rauhen Betriebsbedingungen.

Bei einer weiteren Ausgestaltung wird der Gabelkopf von den Seitenwänden einer im Endbereich von einem Verbindungssteg befreiten Spurstange mit U-profilförmigem Querschnitt gebildet. Eine solche Befestigung ist in der Herstellung und in der Festigkeit besonders günstig.

Bei einer weiteren Ausgestaltung sind als Befestigungs- bzw. Feststellelemente Verschraubungen vorgesehen, wobei die Schrauben in Einsätzen aus Kunststoff bzw. Metall geführt bzw. verschraubt sind, welche Einsätze in Öffnungen der Spurstange eingesetzt sind und Randflansche zu ihrer Festlegung in den Öffnungen aufweisen. Die Einsätze ermöglichen eine günstige Krafteinleitung in die üblicherweise aus Gußmaterial hergestellte Spurstange.

Bei einer weiteren Ausgestaltung ist die Befestigungsplatte des Kugelgelenkes senkrecht zur Mittelachse der Bewegung des Kugelzapfens angeordnet, so daß die Mittelachse parallel verschoben werden kann.

Bei einer weiteren Ausgestaltung weist die Befestigungsplatte eine seitliche Verzahnung auf, die auf einem Kreisbogen um die Lagerbohrung verläuft und die mit einer Schnecke eines drehbar an einem spurstangenseitigen Widerlager ansetzbaren Werkzeuges kämmt. Werkzeug und Verzahnung bilden ein einfaches Schneckengetriebe, mit dem eine Feineinstellung der Spur unter nur geringem Kraftaufwand möglich ist.

Bei einer weiteren Ausgestaltung ist das Werkzeug mit einer Ringnut auf der Schneckenwelle an den Verbindungssteg der Spurstange mit U-profilförmigem Querschnitt ansetzbar und mit der Schnecke etwa tangential an die Verzahnung der Befestigungsplatte anlegbar. Mit dieser Ausgestaltung wird die an den Gabelkopf angrenzende Abschlußkante des Verbindungssteges als Widerlager für das Werkzeug zur Spureinstellung genutzt.

Weitere Einzelheiten und Vorteile ergeben sich aus der nachfolgenden Beschreibung der zugehörigen Zeichnungen, die eine bevorzugte Ausführungsform einer erfindungsgemäßen verstellbaren Befestigung zeigen. In den Zeichnungen zeigen:

Fig. 1 eine verstellbare Befestigung eines Kugelgelenkes entlang der Linie I-I der Fig. 2 geschnitten;

Fig. 2 dieselbe verstellbare Befestigung in der Draufsicht und teilweise geschnitten;

Fig. 3 dieselbe verstellbare Befestigung als Teilschnitt entlang der Linie III-III der Fig. 2 in vergrößerter Darstellung;

Fig. 4 Kugelgelenk der verstellbaren Befestigung in der Draufsicht und in vergrößerter Darstellung;

Fig. 5 dasselbe Kugelgelenk entlang der Linie V-V der Fig. 4 geschnitten;

Fig. 6 dasselbe Kugelgelenk entlang der Linie VI-VI der Fig. 4 geschnitten;

Fig. 7 Teilansicht der Verzahnung des Kugelgelenkes in der Betrachtungsrichtung VII der Fig. 4 und in vergrößerter Darstellung;

Fig. 8 dieselbe Verzahnung entlang der Linie VIII-VIII der Fig. 7 geschnitten;

Fig. 9 verstellbare Befestigung im Teilschnitt und mit Werkzeug zur Spureinstellung beim Einsetzen (gestrichelte Darstellung) und beim Einstellen der Spur (ausgezogene Darstellung).

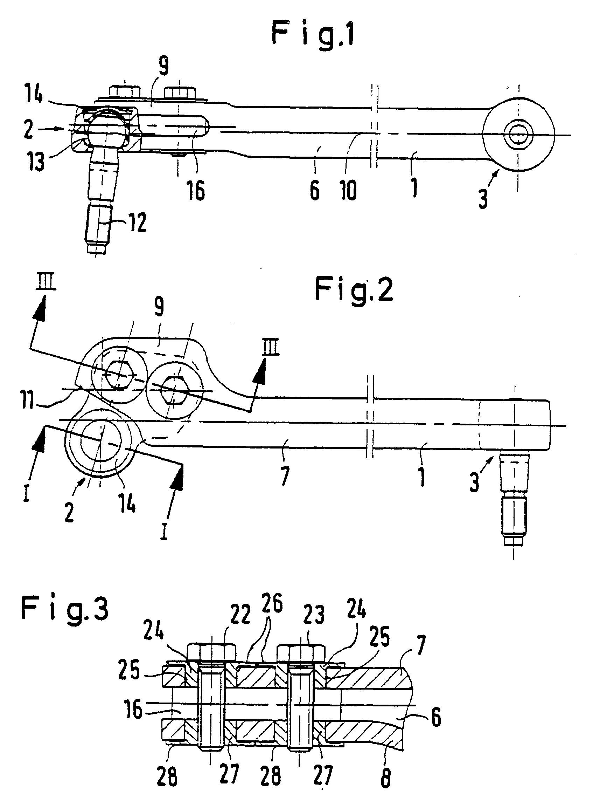

In den Fig. 1 und 2 ist eine Spurstange 1 dargestellt, die an einem Ende ein verstellbar befestigtes Kugelgelenk 2 und am anderen Ende ein unverstellbares befestigtes Kugelgelenk 3 aufweist. Die Spurstange 1 ist im Querschnitt im wesentlichen U-profilförmig ausgebildet. Ein Verbindungssteg 6 zwischen Seitenwänden 7, 8 endet vor dem Ende der Spurstange 1, so daß dort ein Gabelkopf 9 ausgebildet ist. Im Hinblick auf die Befestigung des Kugelgelenkes 2 sind die Seitenwände 7, 8 im Bereich des Gabelkopfes erhöht. Ferner weist der Gabelkopf 9 eine schräg zur Spurstangenachse 10 verlaufende Schnittkante 11 auf, die eine Schwenkbewegung des Kugelgelenkes 2 ermöglicht.

Das Kugelgelenk 2 hat einen Kugelzapfen 12, der unter Zwischenlage einer Lagerschale 13 in einem Gelenkgehäuse 14 gehalten ist.

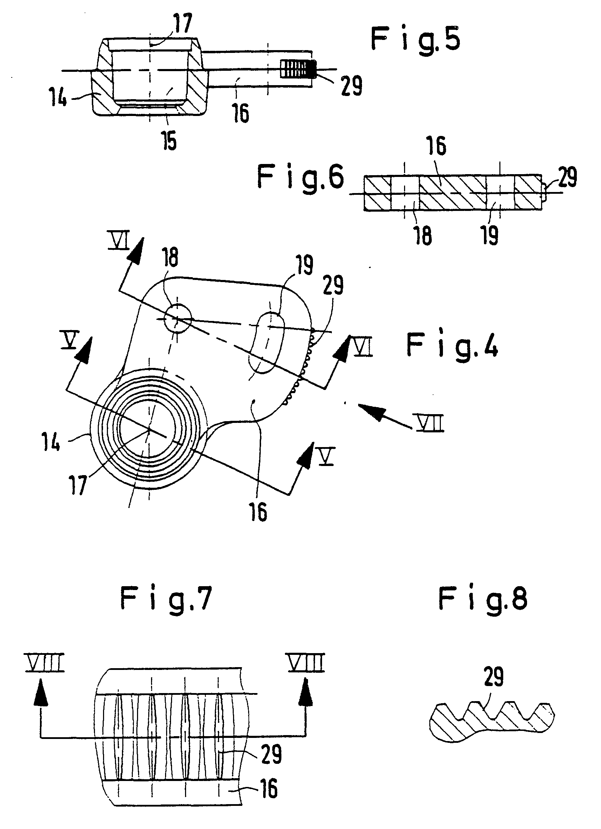

Einzelheiten des Gelenkgehäuses 14 lassen sich besser anhand der Fig. 4 bis 6 beschreiben. Das Gelenkgehäuse 14 hat eine topfförmige Aufnahme 15 für Lagerschale 13 und Kugelzapfen 12, an die seitlich eine Befestigungsplatte 16 angeflanscht ist, die senkrecht zur Mittelachse 17 der Bewegung des Kugelzapfens 12 ausgerichtet ist.

Die Befestigungsplatte 16 hat eine Lagerbohrung 18, die exzentrisch zur Mittelachse 17 angeordnet ist. Die Befestigungsplatte 16 weist ferner ein Langloch 19 auf, welches sich auf einem Kreisbogen um die Lagerbohrung 18 erstreckt.

Wie aus den Fig. 1 bis 3 ersichtlich, ist die Befestigungsplatte 16 zwischen die Seitenwände 7, 8 des Gabelkopfes 9 eingelassen und dort mittels Schrauben 22, 23 befestigt und festgelegt. Die Schrauben 22, 23 sind kopfseitig in Einsätzen 24 aus Kunststoff oder Metall geführt, die in Öffnungen 25 des Gabelkopfes 9 eingesetzt sind und dort axial von Befestigungsflanschen 26 gehalten werden. Gewindeseitig sind die Schrauben 22, 23 in Einsätze 27 eingeschraubt, die ebenfalls Befestigungsflansche 28 aufweisen. Die Einsätze dienen insbesondere der gleichmäßigen Krafteinleitung in die Spurstange 1.

Durch Anziehen der Schrauben 22, 23 werden die Seitenwände 7, 8 der Spurstange 1 im Bereich des Gabelkopfes 9 zusammengezogen, wobei die Befestigungsplatte 16 und somit das Kugelgelenk 2 in der gewünschten Schwenklage fixiert wird. Ein Nachstellen der Verbindung ist auf einfache Weise durch Lockerung der Schrauben 22, 23, Schwenken der Befestigungsplatte 16 um die Schraube 22 und nachfolgendes Anziehen der beiden Schrauben 22, 23 möglich.

Zur Erleichterung der Ein- bzw. Nachstellung der Befestigung weist die Befestigungsplatte 16 randseitig eine Verzahnung 29 auf, die in den Fig. 4 bis 9 dargestellt ist. Wie besonders gut aus der Fig. 4 ersichtlich, ist die Verzahnung 29 auf einem Kreisbogen um die Lagerbohrung 18 angeordnet, so daß sie als Bestandteil eines Schneckengetriebes die Befestigungsplatte um die Lagerbohrung 18 in Drehung versetzen kann.

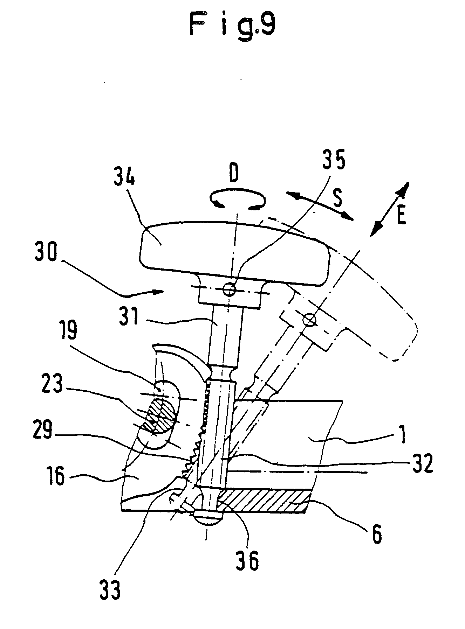

Hierzu ist als weiterer Bestandteil ein in Fig. 9 dargestelltes Werkzeug 30 vorgesehen. Das Werkzeug 30 hat eine Welle 31, auf deren Mittelabschnitt eine Schnecke 32 ausgebildet ist. Endseitig weist die Welle 31 eine Ringnut 33 mit Kreisquerschnitt auf. Anderenends ist das Werkzeug 30 mit einem Handgriff 34 ausgestattet, der mittels eines Splintes 35 auf der Welle 31 befestigt ist.

Zum Einstellen der Spur wird das Werkzeug 30 in der Einführrichtung E so zwischen Befestigungsplatte 16 und Verbindungssteg 6 der Spurstange 1 geschoben, daß die Ringnut 33 etwa in Höhe des Verbindungssteges 6 angeordnet ist. Dabei kann die Schnecke 32 bereits in ihrem unteren Bereich mit der Verzahnung 29 kämmen. Dann wird das Werkzeug 30 durch Schwenken in der Schwenkrichtung S mit seiner Ringnut 33 an einem entsprechenden Radius 36 des Verbindungssteges 6 zur Anlage gebracht. Dabei kommt die Schnecke 32 an ihrem mittleren oder oberen Bereich mit der Verzahnung 29 zum Eingriff. Durch Drehen des Handgriffes 34 in der Drehrichtung D kann nun die Spur kraftsparend und genau eingestellt werden.

Nach dem Einstellen wird das Werkzeug 30 entfernt, indem es in der Schwenkrichtung S zurückgeschwenkt und in der Einführrichtung E herausgeführt wird.

Bezugszeichenliste
1 Spurstange
2 Kugelgelenk
3 Kugelgelenk
6 Verbindungssteg
7 Seitenwand
8 Seitenwand
9 Gabelkopf
10 Spurstangenachse
11 Schnittkante
12 Kugelzapfen
13 Lagerschale
14 Gelenkgehäuse
15 Aufnahme
16 Befestigungsplatte
17 Mittelachse
18 Lagerbohrung
19 Langloch
22 Schraube
23 Schraube
24 Einsatz
25 Öffnung
26 Befestigungsflansch
27 Einsatz
28 Befestigungsflansch
29 Verzahnung
30 Werkzeug
31 Welle
32 Schnecke
33 Ringnut
34 Handgriff
35 Splint
36 Radius
E Einführrichtung
S Schwenkrichtung
D Drehrichtung

## Patentansprüche

1. Verstellbare Befestigung eines Kugelgelenkes (2) an einer Spurstange (1) für Lenkgestänge von Kraftfahrzeugen, wobei das Kugelgelenk (2) einen um eine Mittelachse (17) allseitig beweglich in einem Gelenkgehäuse (14) gelagerten Kugelzapfen (12) aufweist, und die Mittelachse (17) durch Verstellen des Kugelgelenkes (2) relativ zur Spurstange (1) verschiebbar ist, dadurch gekennzeichnet, daß das Kugelgelenk (2) eine Befestigungsplatte (16) aufweist, die eine exzentrisch zur Mittelachse (17) der Bewegungen des Kugelzapfens (12) angeordnete Lagerbohrung (18) hat, daß die Befestigungsplatte (16) mit ihrer Lagerbohrung (18) an einem spurstangenfesten Befestigungselement (Schraube 22) schwenkbar gelagert ist, und daß die Spurstange (1) an der Befestigungsplatte (16) angreifende Feststellelemente (Schraube 23) zur Festlegung des Kugelgelenkes (2) in einer bestimmten Schwenklage aufweist.

2. Verstellbare Befestigung gemäß Anspruch 1, dadurch gekennzeichnet, daß das Feststellelement zur Festlegung des Kugelgelenkes (2) in einer bestimmten Schwenklage eine durch eine Bohrung der Spurstange (1) geführte Verschraubung ist, die ein Langloch (19) der Befestigungsplatte (16) durchgreift, wobei sich das Langloch (19) auf einem Kreisbogen um die Lagerbohrung (18) erstreckt.

3. Verstellbare Befestigung nach einem der Ansprüche 1 bis 2, dadurch gekennzeichnet, daß die Spurstange (1) eine Lagerplatte (6, 7) zur Aufnahme der Schrauben (22, 23) aufweist.

4. Verstellbare Befestigung nach einem der Ansprüche 1 bis 3, dadurch gekennzeichnet, daß die Spurstange (1) einen Gabelkopf (9) aufweist, der zwischen Seitenwänden (7, 8) die Befestigungsplatte (16) des Kugelgelenkes (2) aufnimmt.

5. Verstellbare Befestigung nach Anspruch 4, dadurch gekennzeichnet, daß der Gabelkopf (9) von den Seitenwänden (7, 8) einer im Endbereich von einem Verbindungssteg (6) befreiten Spurstange (1) mit im wesentlichen U-profilförmigem Querschnitt gebildet wird.

6. Verstellbare Befestigung nach einem der Ansprüche 1 bis 5, dadurch gekennzeichnet, daß die Schrauben (22, 23) in Einsätzen (24, 27) aus Kunststoff bzw. Metall geführt bzw. verschraubt sind, welche Einsätze (24, 27) in Öffnungen (25) der Spurstange (1) eingesetzt sind und Befestigungsflansche (26, 28) zu ihrer Festlegung in den Öffnungen (25) aufweisen.

7. Verstellbare Befestigung nach einem der Ansprüche 1 bis 6, dadurch gekennzeichnet, daß die Befestigungsplatte (16) des Kugelgelenkes (2) senkrecht zur Mittelachse (17) der Bewegung des Kugelzapfens (12) angeordnet ist.

8. Verstellbare Befestigung nach einem der Ansprüche 1 bis 7, dadurch gekennzeichnet, daß die Befestigungsplatte (16) eine seitliche Verzahnung (29) aufweist, die auf einem Kreisbogen um die Lagerbohrung (18) verläuft und die mit einer Schnecke (32) eines drehbar an einem spurstangenseitigen Widerlager ansetzbaren Werkzeuges (30) kämmt.

9. Verstellbare Befestigung nach den Ansprüchen 5 und 8, dadurch gekennzeichnet, daß das Werkzeug (30) mit einer Ringnut (33) auf der Schneckenwelle (31) an den Verbindungssteg (6) der Spurstange (1) mit U-profilförmigem Querschnitt ansetzbar und mit der Schnecke (32) etwa tangential an die Verzahnung (29) der Befestigungsplatte (16) anlegbar ist.

## Revendications

1. Fixation réglable d'un joint à rotule (2) sur une barre d'accouplement (1) pour timonerie de direction de véhicules automobiles, le joint à rotule (2) présentant un pivot de rotule (12), monté mobile de tous. côtés autour d'un axe central (17), dans une boîte de joint (14) et l'axe central (17) pouvant coulisser par déplacement du joint à rotule (2) par rapport à la barre d'accouplement (1), caractérisée en ce que le joint à rotule (2) comporte une plaque de fixation (16) qui présente un alésage de pivot (18), disposé excentré par rapport à l'axe central (17) des déplacements du joint à rotule (12), en ce que la plaque de fixation (16) avec son alésage de pivot (18) est montée pivotante sur un élément de fixation (vis 22) solidaire de la barre d'accouplement et en ce que la barre d'accouplement (1) présente des éléments de blocage (vis 23), agissant sur la plaque de fixation (16), pour bloquer le joint à rotule (2) dans une position de pivotement déterminée.

2. Fixation réglable selon la revendication 1, caractérisée en ce que pour bloquer le joint à rotule (2) dans une position de pivotement déterminée, l'élément de blocage est un vissage traversant un trou pratiqué dans la barre d'accouplement (1), lequel vissage traverse un trou allongé (19) de la plaque de fixation (16), le trou allongé (19) s'étendant sur un arc de cercle autour de l'alésage de pivot (18).

3. Fixation réglable selon la revendication 1 ou 2, caractérisée en ce que la barre d'accouplement (1) présente une plaque de support (6, 7) destinée à loger les vis (22, 23).

4. Fixation réglable selon l'une des revendications 1 à 3, caractérisée en ce que la barre d'accouplement (1) présente une tête à fourche (9) qui loge la plaque de fixation (16) du joint à rotule (2), entre des parois latérales (7, 8).

5. Fixation réglable selon la revendication 4, caractérisée en ce que la tête à fourche (9) est formée par les parois latérales (7, 8) d'une barre d'accouplement (1), libérée dans la région terminale par une barrette de liaison (6) et présentant une section transversale à peu près en U.

6. Fixation réglable selon l'une des revendications 1 à 5, caractérisée en ce que les vis (22, 23) sont guidées ou vissées dans des inserts (24, 27) en matière plastique ou en métal, lesquels inserts sont placés dans des ouvertures (25) de la barre d'accouplement (1) et présentent des brides de fixation (26, 28) destinées à les fixer dans les ouvertures (25).

7. Fixation réglable selon l'une des revendications 1 à 6, caractérisée en ce que la plaque de fixation (16) du joint à rotule (2) est disposée perpendiculairement à l'axe central (17) du déplacement du pivot de rotule (12).

8. Fixation réglable selon l'une des revendications 1 à 7, caractérisée en ce que la plaque de fixation (16) présente une denture (29) latérale qui s'étend sur un arc de cercle, autour de l'alésage de pivot (18) et qui engrène avec une vis sans fin (32) d'un outil (30) pouvant être placé tournant contre une butée, côté barre d'accouplement.

9. Fixation réglable selon les revendications 5 et 8, caractérisée en ce que l'outil (30) peut être placé par une rainure annulaire (33) sur l'arbre de vis (31), contre la barrette de liaison (6) de la barre d'accouplement (1), de section transversale en U, et peut être appliqué, par la vis sans fin (32), à peu près tangentiellement contre la denture (29) de la plaque de fixation (16).

## Claims

1. Adjustable fastening of a ball joint (2) on a track rod (1) for the steering linkage of motor vehicles, the ball joint (2) having a ball pin (12) mounted in a joint housing (14) movably on all sides about a centre axis (17), and the centre axis (17) being displaceable relative to the track rod (1) as a result of the adjustment of the ball joint (2), characterized in that the ball joint (2) has a fastening plate (16) which possesses a bearing bore (18) arranged eccentrically relative to the centre axis (17) of the movements of the ball pin (12), in that the fastening plate (16) is mounted pivotally by means of its bearing bore (18) on a fastening element (screw 22) fixed to the track rod, and in that the track rod (1) has locking elements (screw 23) engaging on the fastening plate (16) for fixing the ball joint (2) in a specific pivoting position.

2. Adjustable fastening according to Claim 1, characterized in that the locking element for fixing the ball joint (2) in a specific pivoting position is a screw connection which is guided through a bore of the track rod (1) and which passes through a long hole (19) of the fastening plate (16), the long hole (19) extending over an arc of a circle about the bearing bore (18).

3. Adjustable fastening according to one of Claims 1 to 2, characterized in that the track rod (1) has a bearing plate (6, 7) for receiving the screws (22, 23).

4. Adjustable fastening according to one of Claims 1 to 3, characterized in that the track rod (1) has a fork head (9) which receives the fastening plate (16) of the ball joint (2) between side walls (7, 8).

5. Adjustable fastening according to Claim 4, characterized in that the fork head (9) is formed by the side walls (7, 8) of a track rod (1) of essentially Uprofile cross-section free of a connecting web (6) in the end region.

6. Adjustable fastening according to one of Claims 1 to 5, characterized in that the screws (22, 23) are guided or screwed in inserts (24, 27) made of plastic or metal, which inserts (24, 27) are inserted into orifices (25) of the track rod (1) and have fastening flanges (26, 28) for fixing them in the orifices (25).

7. Adjustable fastening according to one of Claims 1 to 6, characterized in that the fastening plate (16) of the ball joint (2) is arranged perpendicularly relative to the centre axis (17) of the movement of the ball pin (12).

8. Adjustable fastening according to one of Claims 1 to 7, characterized in that the fastening plate (16) has a lateral toothing (29) which extends over an arc of a circle about the bearing bore (18) and which meshes with a worm (32) of a tool (30) which can be placed rotatably against an abutment located on the track rod.

9. Adjustable fastening according to Claims 5 and 8, characterized in that the tool (30) can be placed by means of an annular groove (33) on the worm shaft (31) against the connecting web (6) of the track rod (1) of U-profile cross-section and by means of the worm (32) can be brought to bear approximately tangentially against the toothing (29) of the fastening plate (16).

# Fig.1

# Fig.2

# Fig.3

Fig.5

Fig.6

Fig.4

Fig.7

Fig.8

# Fig.9